# EUROPEAN PATENT APPLICATION

(11) **EP 3 614 009 A1**
(43) Date of publication of application: **26.02.2020**
(21) Application number: 18787535.6
(22) Date of filing: 02.03.2018
(51) Int. Cl.: F16D 25/08, F16J 15/16

(54) **CYLINDER DEVICE**

(30) Priority: 19.04.2017 JP 2017083201
(71) Applicant: Aisin Seiki Kabushiki Kaisha, Kariya-shi, Aichi 448-8650 (JP)
(72) Inventor: MATSUISHI, Takashi, Kariya-shi Aichi 448-8650 (JP); IITSUKA, Mitsuru, Kariya-shi Aichi 448-8650 (JP)
(74) Representative: Cabinet Beau de Loménie
(86) International application number: PCT/JP2018/008077
(87) International publication number: WO 2018/193728

(57) **Abstract**

A release cylinder (1) according to an embodiment includes a cup holder (13) being supported by a piston (12) and including an end face (13a1) that faces in a direction (X2) and is located radially outside an end face (12e) with spacing, an annular projection (13b) that projects in the direction (X2) from between the end face (12e) and the end face (13a1), and an inner periphery (13f) radially inside the projection (13b), including an inner conical surface (13b1); and a cup seal (14) provided with a recess (14d) that is located in the direction (X2) of the cup holder (13) and is open toward the projection (13b), and an outward flange (14e) to be fitted with the inner conical surface (13b1) in the axial direction on the opening side of the recess (14d). The cup seal (14) is elastically deformed to come into contact with an inner cylinder (11a) and an outer cylinder (11b).

## Description

### TECHNICAL FIELD

The present invention relates to a cylinder device.

### BACKGROUND ART

Conventionally, cylinder devices are known, which include a piston to be movable in an axial direction inside a cylinder chamber; a holder with a projection that projects oppositely relative to the piston in the axial direction; and a sealing member provided with a recess that opens toward the projection and a fitting part to be fitted with the projection on the opening side of the recess in the axial direction.

### CITATION LIST

### Patent Literature

Patent Document 1: Japanese Laid-open Utility Model Application Publication No. H01-150224

### SUMMARY OF INVENTION

### PROBLEM TO BE SOLVED BY THE INVENTION

However, in such a conventional cylinder device, the recess is annular and radially depressed, and is located on the inner periphery of the projection to be fitted with the fitting part in the axial direction. It is thus difficult or impossible to mold the holder through undercut processing. This may increase labor hour and cost required to manufacture the holder.

### MEANS FOR SOLVING PROBLEM

It is an object of the preset invention to provide a cylinder device with higher operability which includes a holder that can hold a sealing member more securely, for example.

According to one embodiment of the present invention, for example, a cylinder device includes a cylinder including an inner cylinder, an outer cylinder that is located radially outside the inner cylinder, and a cylinder chamber that is located between the inner cylinder and the outer cylinder, and opens toward the inner cylinder in an axial direction; a piston that is movably supported by the cylinder in the axial direction inside the cylinder chamber, the piston including a first end face that is located in an opposite direction of the axial direction and radially inward; a holder that is supported by the piston, and includes a second end face that faces in the opposite direction of the axial direction and located radially outside the first end face with spacing, a first projection of annular form that projects from between the first end face and the second end face in the opposite direction of the axial direction, and an inner periphery radially inside the first projection, provided with an undercut; and a sealing member that is elastically deformed to come into contact with the inner cylinder and the outer cylinder. The sealing member is provided with a first recess that is located in the holder in the opposite direction of the axial direction and opens toward the first projection, and a first fitting part configured to be fitted in the undercut in the axial direction on an opening side of the first recess. According to such a structure, the first projection projects from between the first end face and the second end face. Thereby, the undercut can be subjected to undercut processing by use of a mold that is axially divided from an apex of the undercut. This makes it possible for the holder to more firmly hold the sealing member, leading to providing the cylinder device with higher operability, for example.

In the cylinder device, for example, the sealing member includes a second fitting part configured to be fitted with an outer periphery of the first projection in the axial direction on the opening side of the first recess. According to such a structure, both the first fitting part and the second fitting part of the sealing member are fitted onto the inner periphery and the outer periphery of the first projection of the holder in the axial direction, respectively. This makes it further difficult for the sealing member from coming off from the holder, for example.

In the cylinder device, for example, the piston is provided with a second recess that opens radially outward, and the holder includes a third fitting part configured to be fitted in the second recess in the axial direction. According to such a structure, the second recess and the third fitting part serve to prevent the piston and the holder from becoming apart from each other in the axial direction, which makes it possible to prevent an invalid stroke of the clutch pedal, for example.

### BRIEF DESCRIPTION OF DRAWINGS

FIG. 1 is an exemplary and schematic structural view of a clutch system including a cylinder device according to a first embodiment;
FIG. 2 is an exemplary and schematic sectional view of the cylinder device according to the first embodiment;
FIG. 3 is an exemplary and schematic sectional exploded view of a part of the cylinder device according to the first embodiment;
FIG. 4 is an enlarged view of a part of FIG. 2;
FIG. 5 is an exemplary and schematic sectional view of the vicinity of a sealing member in the cylinder device with no hydraulic load in the first embodiment;
FIG. 6 is an exemplary and schematic sectional view of the vicinity of the sealing member in the cylinder device with hydraulic load in the first embodiment; and
FIG. 7 is an exemplary and schematic sectional view of the vicinity of a sealing member in a cylinder device with hydraulic load in a second embodiment.

### DESCRIPTION OF EMBODIMENTS

Exemplary embodiments of the present invention will be described below. Constitutions of the embodiments as well as operations and results (effects) to be brought about by the constitutions will be illustrated below by way of example.

The following embodiments include the same or like elements. The same or like elements will be denoted by common reference numerals, and overlapping descriptions will be omitted. In the specification, ordinal numbers are used to distinguish parts, components, and members from each other alone and not intended to indicate order or priority.

### First Embodiment

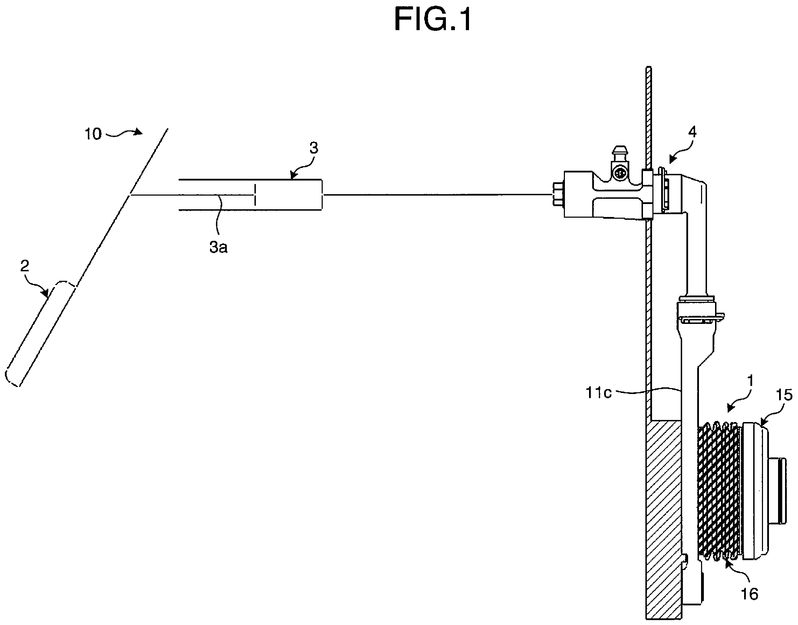

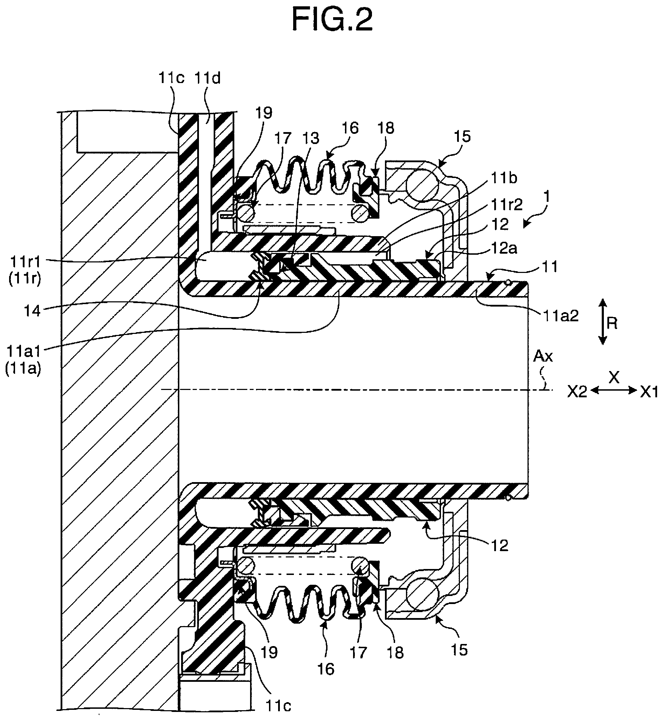

FIG. 1 is a structural view of a clutch system 10. As illustrated in FIG. 1, the clutch system 10 includes a clutch pedal 2, a master cylinder 3, a clutch line 4, and a release cylinder 1, for example. In the clutch system 10, by pressing the clutch pedal 2, a piston 3a of the master cylinder 3 strokes to apply hydraulic pressure to the clutch line 4. This causes a piston 12 (see FIG. 2) of the release cylinder 1 to stroke, and causes a release bearing 15 to axially press a diaphragm spring (not illustrated), thereby disengaging the clutch. The release cylinder 1 is an exemplary cylinder device. The release cylinder 1 may also be referred to as a slave cylinder or an operating cylinder.

FIG. 2 is a sectional view of the release cylinder 1. As illustrated in FIG. 2, the release cylinder 1 includes a cylinder 11, the piston 12, a cup holder 13, a cup seal 14, the release bearing 15, a cover member 16, a biasing member 17, and support members 18 and 19, for example. The cup holder 13 is an exemplary holder, and the cup seal 14 is an exemplary sealing member.

In the following, directions are defined for the sake of convenience, as illustrated in the drawings. An X direction is along an axis Ax of the release cylinder 1, and an R direction is a radial direction of the axis Ax. In FIG. 2 a release bearing 15 side (rightward) is referred to as an X1 direction, and the direction opposite to the release bearing 15 (leftward) is referred to as an X2 direction. The X1 direction is an exemplary axial direction, and the X2 direction is an exemplary opposite direction of the axial direction.

The cylinder 11 includes an inner cylinder 11a, an outer cylinder 11b, and a flange 11c, for example. The inner cylinder 11a and the outer cylinder 11b are concentric about the axis Ax. Specifically, the outer cylinder 11b is located radially outside the inner cylinder 11a with spacing, surrounding the inner cylinder 11a. The inner cylinder 11a includes a first part 11a1 located inside the outer cylinder 11b and a second part 11a2 projecting further than the outer cylinder 11b in the X1 direction.

The cylinder 11 is provided with an annular cylinder chamber 11r between the first part 11a1 and the outer cylinder 11b. The cylinder chamber 11r is open in the X1 direction, that is, toward the release bearing 15. The cylinder chamber 11r accommodates the piston 12, the cup holder 13, and the cup seal 14 in this order from the release bearing 15 in the X2 direction.

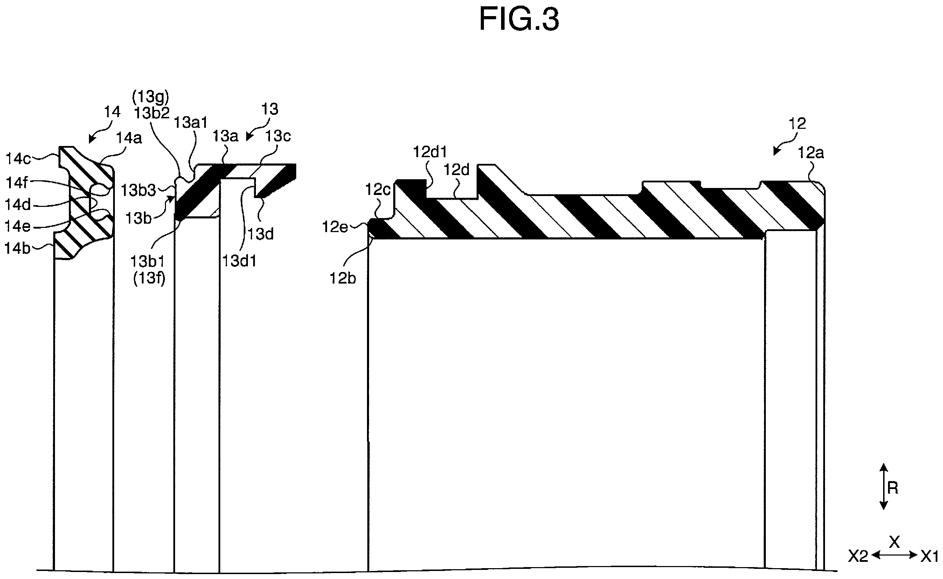

The cup seal 14, while elastically deformed, is attached to the cylinder chamber 11r. Specifically, an inner lip 14b and an outer lip 14c of the cup seal 14 are bent radially outward and inward with respect to the posture of a free length (see FIG. 3). Thus, by the elastic force of the inner lip 14b and the outer lip 14c, the inner cylinder 11a and the outer cylinder 11b are pressed to prevent hydraulic oil, filled in the upstream side (X2 direction) of the cylinder chamber 11r, from leaking downstream (in X1 direction). In other words, the cylinder chamber 11r is partitioned by the cup seal 14 into an oil chamber 11r1 filled with the hydraulic oil and a chamber 11r2 filled with no hydraulic oil.

The flange 11c projects radially outward from the X2-directional end of the outer cylinder 11b. The flange 11c is provided with an oil port 11d. The oil port 11d extends upward in FIG. 1 and FIG. 2, that is, toward the clutch line 4. The top end of the oil port 11d is connected to the clutch line 4 while the bottom end of the oil port 11d is connected to the oil chamber 11r1.

The release bearing 15 is supported by the second part 11a2 of the inner cylinder 11a so as to be movable in the axial direction. The release bearing 15 is positioned adjacent to the piston 12 in the X1 direction. The release bearing 15 is also in contact with the diaphragm spring (not illustrated).

In the present embodiment, by pressing the clutch pedal 2, for example, hydraulic pressure is applied to the oil chamber 11r1, causing the cup seal 14, the cup holder 13, and the piston 12 to move from their respective positions in the X1 direction in FIG. 2. Thereby, the release bearing 15 and the diaphragm spring are pressed by the piston 12 in the X1 direction, to move from a first position, corresponding to a clutch engaging position (see FIG. 2), to a second position corresponding to a clutch disengaging position (not illustrated). Meanwhile, in response to a release of the clutch pedal 2 from the pressed state and a decrease in the hydraulic pressure in the oil chamber 11r1, the release bearing 15 and the diaphragm spring are returned from the second position to the first position (see FIG. 2) by the elastic force of the diaphragm spring. Thereby, the piston 12, the cup holder 13, and the cup seal 14 are pressed by the release bearing 15 in the X2 direction to return to their respective positions in FIG. 2.

The cover member 16 has a cylindrical shape so as to cover the outside of the biasing member 17 radially. The cover member 16 also has an accordion form and is extendable axially. The Xl-directional and X2-directional ends of the cover member 16 are radially supported by the support members 18 and 19. The Xl-directional end of the cover member 16 is connected to the release bearing 15 through the support member 18 while the X2-directional end of the cover member 16 is fixed to the flange 11c. Along with the axial movement of the release bearing 15, the cover member 16 is extendable or shrinkable in the axial direction.

The biasing member 17 is located between the support member 18 and the support member 19. The biasing member 17 biases the release bearing 15 through the support member 18 in the X1 direction. Thereby, the biasing member 17 eliminates the gap between the release bearing 15 and the diaphragm spring, so that the release bearing 15 and the diaphragm spring are constantly in contact with each other. The biasing force of the biasing member 17 is smaller than the elastic force of the diaphragm spring. The biasing member 17 may also be referred to as an elastic member or a coil spring, for example.

The piston 12 has a cylindrical shape, following the outer periphery of the inner cylinder 11a. The piston 12 is axially slidably supported by the inner cylinder 11a inside the cylinder chamber 11r. An Xl-directional end 12a of the piston 12 projects from the cylinder chamber 11r to oppose the release bearing 15. The piston 12 may be made of a synthetic resin material, for example.

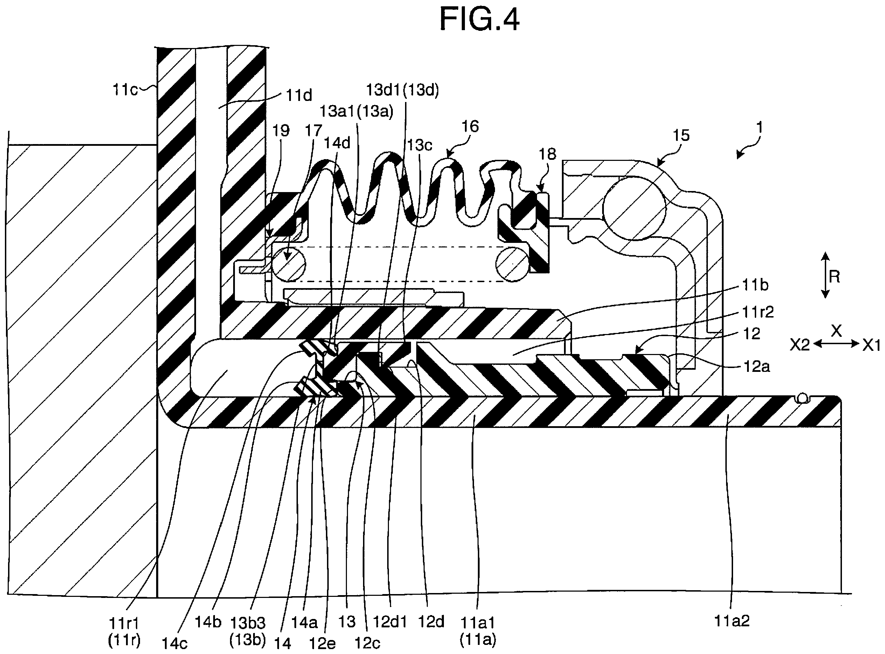

FIG. 3 is a sectional view of a part of the release cylinder 1. FIG. 4 is an enlarged view of a part of FIG. 2. As illustrated in FIG. 3 and FIG. 4, the piston 12 is provided with recesses 12c and 12d in the outer periphery. The recess 12c is located in an X2-direction end 12b of the piston 12 and is open radially outward in the X2 direction. The recess 12c has an annular shape along the cup holder 13, and radially and axially supports the cup holder 13. The recess 12c may also be referred to as a cutout. A part of the piston 12 more radially inside than the recess 12c may also be referred to as an overhang or a projection.

In the outer periphery of the piston 12, the recess 12d is located offset from the recess 12c in the X1 direction. The recess 12d is open radially outward, and has a fitting face 12d1 facing in the X1 direction. The fitting face 12d1 opposes a tab 13d of the cup holder 13 in the axial direction with the cup holder 13 attached to the piston 12. The recess 12d is an exemplary second recess, and the tab 13d is an exemplary third fitting part.

The cup holder 13 includes a base 13a, a projection 13b, and an attachment 13c, for example. The base 13a has a cylindrical shape along the bottom face of the recess 12c. As illustrated in FIG. 4, the width of the base 13a is set substantially the same as the width of the recess 12c in the X direction. The base 13a is radially and axially supported by the recess 12c.

The base 13a has an end face 13a1 facing in the X2 direction. The end face 13a1 is located radially outside an end face 12e of the piston 12 with spacing. The end face 12e faces in the X2 direction. The end face 13a1 and the end face 12e are radially aligned with each other with the cup holder 13 attached to the piston 12. The end face 12e is an exemplary first end face, and the end face 13a1 is an exemplary second end face.

The attachment 13c projects in the X1 direction from the radially outside end of the base 13a. The attachment 13c has a cylindrical shape, and is supported by the outer periphery of the piston 12.

The attachment 13c is provided with the tab 13d. The tab 13d projects radially outward from the X1-directional end of the attachment 13c. The tab 13d has a fitting face 13d1 facing in the X2 direction. The fitting face 13d1 faces the fitting face 12d1 of the recess 12d in the axial direction. The attachment 13c includes three tabs 13d with equal intervals around the axis Ax, for example. The number of tabs 13d is not limited to three, and may be two or four or greater, for example.

The projection 13b projects in the X2 direction from the end face 13a1 of the base 13a. The projection 13b has an annular shape along the entire perimeter of the end face 13a1. The projection 13b is located between the end face 13a1 and the end face 12e. The projection 13b is an exemplary first projection.

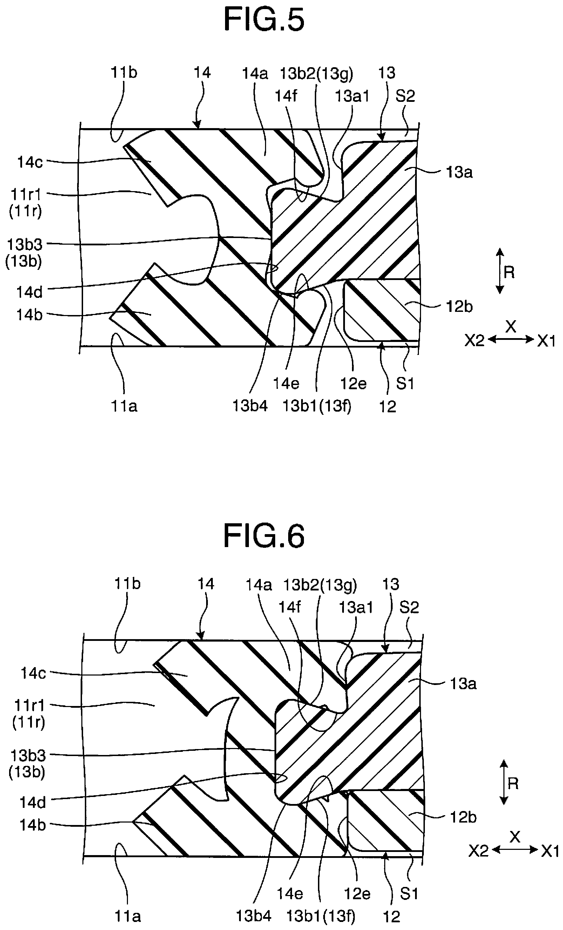

FIG. 5 is a sectional view of the vicinity of the cup seal 14 in the release cylinder 1 with no hydraulic load. FIG. 6 is a sectional view of the vicinity of the cup seal 14 in the release cylinder 1 with hydraulic load. As illustrated in FIG. 5 and FIG. 6, the projection 13b includes an inner periphery 13f facing radially inward, an outer periphery 13g facing radially outward, and an end face 13b3 facing in the X2 direction.

The inner periphery 13f includes an inner conical surface 13b1 that projects radially inward from the position adjacent to the end face 12e in the X2 direction. The inner conical surface 13b1 projects further radially inward than the inner periphery of the base 13a. The outer periphery 13g includes an outer conical surface 13b2 that projects radially outward from the position adjacent to the end face 13a1 in the X2 direction. The inner conical surface 13b1 and the outer conical surface 13b2 are exemplary undercuts. The undercut refers to an uneven form that prevents a molded object (the cup holder 13) from being released from a mold, for example. In other words, the undercut refers to an overlap allowance between a molded object and a mold, and a shape that does not allow the mold from being linearly removed. That is, a molded object cannot be removed from the mold even if the mold is dividable into two parts.

The end face 13b3 extends radially between the X2-directional end of the inner conical surface 13b1 and the X2-directional end of the outer conical surface 13b2. The cup holder 13 may be made of a synthetic resin material, for example.

The cup seal 14 includes a base 14a, the inner lip 14b, the outer lip 14c, an outward flange 14e, and an inward flange 14f, for example. The base 14a is provided with a recess 14d that is open in the X1 direction, that is, toward the projection 13b. The recess 14d extends along the entire perimeter of the base 14a corresponding to the projection 13b. The recess 14d can accommodate the projection 13b. The recess 14d is an exemplary first recess.

In the free state of the cup seal 14 (see FIG. 3), the inner lip 14b projects radially inward from the base 14a in the X2 direction. In the free state (see FIG. 3) of the cup seal 14, the outer lip 14c projects radially outward from the base 14a in the X2 direction. The inner lip 14b and the outer lip 14c have an annular shape extending along the entire perimeter of the base 14a.

As illustrated in FIG. 5, the inner lip 14b and the outer lip 14c are attached in a radially elastically deformed state to the cup seal 14 such that the cup seal 14 substantially has an H-form as a whole. The inner lip 14b and the outer lip 14c exert elastic force to radially press the inner cylinder 11a and the outer cylinder 11b, thereby radially sealing the entire inner and outer peripheries of the cylinder chamber 11r. The cup seal 14 may be made of an elastic member such as an elastomer, for example.

The outward flange 14e projects radially outward from the opening of the recess 14d, that is, from the X1-directional end. The outward flange 14e opposes at least part of the inner conical surface 13b1 in the axial direction while the cup seal 14 is attached to the cup holder 13. In the free state (see FIG. 3) of the cup seal 14, the outward flange 14e extends in the radial direction. When the cup seal 14 is pressed by the hydraulic pressure in the X1 direction or when the cup seal 14 is pressed by the cup holder 13 in the X2 direction, the outward flange 14e is elastically deformed radially outward to press the inner conical surface 13b1. The outward flange 14e is an exemplary first fitting part.

The inward flange 14f projects radially inward from the opening of the recess 14d, that is, from the X1-directional end. The inward flange 14f opposes at least a part of the outer conical surface 13b2 in the axial direction with the cup seal 14 attached to the cup holder 13. In the free state (see FIG. 3) of the cup seal 14, the inward flange 14f extends in the radial direction. When the cup seal 14 is pressed by the hydraulic pressure in the X1 direction or when the cup seal 14 is pressed by the cup holder 13 in the X2 direction, the inward flange 14f is elastically deformed radially inward to press the outer conical surface 13b2. The inward flange 14f is an exemplary second fitting part.

As illustrated in FIG. 6, in the present embodiment, when the cup seal 14 is pressed by the hydraulic pressure in the X1 direction, the bottom face of the recess 14d hits the end face 13b3 of the projection 13b, whereby the cup seal 14 is elastically deformed and radially expands. This works to increase the frictional force (surface pressure) between the inner lip 14b and the inner cylinder 11a, and the frictional force (surface pressure) between the outer lip 14c and the outer cylinder 11b. Thus, if the inner lip 14b and the outer lip 14c are pressed by the hydraulic pressure in this state in the X1 direction, for example, the cup seal 14 is prevented from entering a gap S1 between the inner cylinder 11a and the piston 12 and a gap S2 between the outer cylinder 11b and the cup holder 13. This can consequently prevent defects of the cup seal 14, such as galling, which would otherwise occur due to the entry of the cup seal 14 into the gaps S1 and S2, for example.

As described above, in the present embodiment, the release cylinder 1 includes, for example, the cup holder 13 and the cup seal 14. The cup holder 13 is supported by the piston 12 and includes the end face 13a1 that faces in the X2 direction and is located radially outside the end face 12e with spacing, the annular projection 13b that projects in the X2 direction from between the end face 12e and the end face 13a1, and the inner periphery 13f radially inside the projection 13b, including the inner conical surface 13b1. The cup seal 14 is provided with the recess 14d that is located in the X2 direction of the cup holder 13 and is open toward the projection 13b, and the outward flange 14e to be fitted with the inner conical surface 13b1 in the axial direction on the opening side of the recess 14d. The cup seal 14 is elastically deformed to come into contact with the inner cylinder 11a and the outer cylinder 11b.

According to such a structure, the projection 13b projects from between the end face 12e and the end face 13a1, so that the inner conical surface 13b1 can be subjected to undercut processing by use of a mold axially divided from an apex 13b4 of the inner conical surface 13b1, for example. This makes it possible for the cup holder 13 to more firmly hold the cup seal 14, leading to providing the release cylinder 1 with higher operability, for example.

In the present embodiment, for example, the cup seal 14 includes the inward flange 14f to be axially fitted with the outer conical surface 13b2 on the opening side of the recess 14d. According to such a structure, both the outward flange 14e and the inward flange 14f of the cup seal 14 are fitted with the inner periphery 13f and the outer periphery 13g of the projection 13b of the cup holder 13 in the axial direction, respectively. This can further prevent the cup seal 14 from coming off from the cup holder 13 in the axial direction, for example.

In the present embodiment, for example, in the free state of the cup seal 14 the outward flange 14e and the inward flange 14f extend in the radial direction. According to such a structure, by the elastic deformation of the cup seal 14s, the frictional force (surface pressure) between the outward flange 14e and the inner conical surface 13b1, and the frictional force (surface pressure) between the inward flange 14f and the outer conical surface 13b2 can increase. This further makes it difficult for the cup seal 14 from coming off from the cup holder 13, for example.

In the present embodiment, the piston 12 is provided with the recess 12d that is open radially outward while the cup holder 13 includes the tab 13d that is fitted into the recess 12d in the axial direction, for example. According to such a structure, the recess 12d and the tab 13d serve to prevent the piston 12 and the cup holder 13 from becoming apart from each other in the axial direction, which can prevent an invalid stroke of the clutch pedal 2, for example.

### Second Embodiment

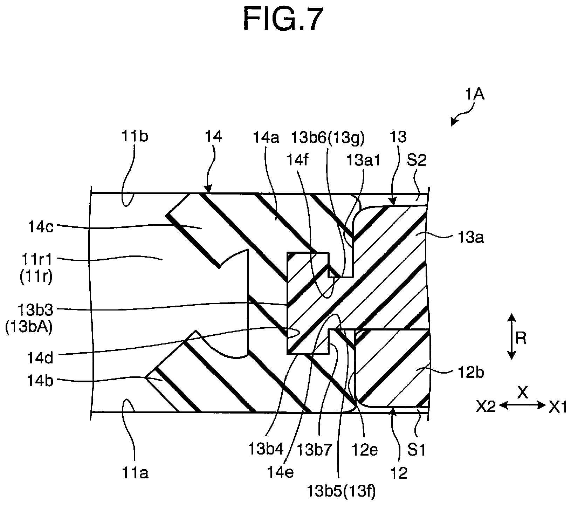

A release cylinder 1A of a second embodiment illustrated in FIG. 7 includes the same or similar structure as the release cylinder 1 in the first embodiment. Thus, the present embodiment can also attain the same or similar results (effects) based on the same or similar structure as the first embodiment.

However, the present embodiment differs from the first embodiment, for example, in that a projection 13bA is provided in the inner periphery 13f and the outer periphery 13g with annular recesses 13b5, 13b6 radially dented, respectively, as illustrated in FIG. 7. In other words, the projection 13bA includes a first part projecting from the end face 13a1 in the X2 direction and a second part projecting radially inward and outward from the X2-directional end of the first part. A fitting face 13b7 of the recess 13b5 (second part) in the axial direction projects more radially inward than the inner periphery of the base 13a. The recess 13b5 may also be referred to as an inner recess, and the recess 13b6 may also be referred to as an outer recess. The recesses 13b5 and 13b6 are exemplary undercuts. Thus, according to the present embodiment, the recess 13b5 can be subjected to undercut processing by use of a mold that is divided from the apex 13b4 of the inner periphery 13f in the axial direction, for example. The amount of undercut of the recess 13b5 may be large as in the present embodiment, and the fitting face 13b7 of the recess 13b5 may radially extend, for example. In such a case, owing to the projection 13bA projecting from between the end face 12e and the end face 13a1, the recess 13b5 can also undergo undercut processing.

While certain embodiments of the present invention have been described above, the embodiments have been presented by way of example only, and are not intended to limit the scope of the inventions. The above embodiments may be embodied in a variety of other forms, and various omissions, substitutions, combinations, and changes may be made without departing from the spirit of the inventions. The accompanying claims and their equivalents are intended to cover the above embodiments as would fall within the scope and spirit of the inventions. The present invention may also be achieved by constitutions other than those described in the embodiments, and may attain various effects (including derivative effects) brought about by the fundamental constitution (technical features). In addition, specifications (structure, type, direction, shape, size, length, width, thickness, height, number, configuration, position, material, and others) of each element can be modified as appropriate for implementation.

### EXPLANATIONS OF LETTERS OR NUMERALS

- 1, 1A: release cylinder (cylinder device)
- 11: cylinder
- 11a: inner cylinder
- 11b: outer cylinder
- 11r: cylinder chamber
- 12: piston
- 12d: recess (second recess)
- 12e: end face (first end face)
- 13: cup holder (holder)
- 13a1: end face (second end face)
- 13b, 13bA: projection (first projection)
- 13b1: inner conical surface (undercut)
- 13b5: recess (undercut)
- 13d: tab (third fitting part)
- 13f: inner periphery
- 13g: outer periphery
- 14: cup seal (sealing member)
- 14d: recess (first recess)
- 14e: outward flange (first fitting part)
- 14f: inward flange (second fitting part)
- R: radial direction
- X: axial direction

## Claims

1. A cylinder device comprising:
a cylinder comprising:
an inner cylinder,
an outer cylinder that is located radially outside the inner cylinder, and
a cylinder chamber that is located between the inner cylinder and the outer cylinder, and opens toward the inner cylinder in an axial direction;
a piston that is movably supported by the cylinder in the axial direction inside the cylinder chamber, the piston including a first end face that is located in an opposite direction of the axial direction and radially inward;
a holder that is supported by the piston, the holder including:
a second end face that faces in the opposite direction of the axial direction and located radially outside the first end face with spacing,
a first projection of annular form that projects from between the first end face and the second end face in the opposite direction of the axial direction, and
an inner periphery radially inside the first projection, provided with an undercut; and
a sealing member that is elastically deformed to come into contact with the inner cylinder and the outer cylinder, the sealing member provided with:
a first recess that is located in the holder in the opposite direction of the axial direction and opens toward the first projection, and
a first fitting part configured to be fitted in the undercut in the axial direction on an opening side of the first recess.

2. The cylinder device according to claim 1, wherein
the sealing member comprises a second fitting part configured to be fitted with an outer periphery of the first projection in the axial direction on the opening side of the first recess.

3. The cylinder device according to claim 1 or 2, wherein
the piston is provided with a second recess that opens radially outward, and
the holder comprises a third fitting part configured to be fitted in the second recess in the axial direction.
